**Europäisches Patentamt**

**European Patent Office**

**Office européen des brevets**

(19)

(11) Veröffentlichungsnummer : **0 235 149 B1**

(12) # EUROPÄISCHE PATENTSCHRIFT

(45) Veröffentlichungstag der Patentschrift :
19.07.89

(21) Anmeldenummer : 86900075.2

(22) Anmeldetag : 23.12.85

(86) Internationale Anmeldenummer :
PCT/DE 85/00559

(87) Internationale Veröffentlichungsnummer :
WO/8603808 (03.07.86 Gazette 86/14)

(51) Int. Cl.⁴ : **F 03 D  3/06**, F 03 D  7/06

(54) **GEKAPSELTE WINDKRAFTMASCHINE MIT AUSSERMITTIGER ROTORACHSE.**

(30) Priorität : 21.12.84 DE 3446694
02.01.85 DE 3500012

(43) Veröffentlichungstag der Anmeldung :
09.09.87 Patentblatt 87/37

(45) Bekanntmachung des Hinweises auf die Patenterteilung : 19.07.89 Patentblatt 89/29

(84) Benannte Vertragsstaaten :
BE FR GB IT NL SE

(56) Entgegenhaltungen :
DE–A– 2 800 551
DE–A– 3 108 945
FR–A– 2 268 170
GB–A– 1 593 459
US–A– 4 392 780

(73) Patentinhaber : MRASEK, Wilhelm
Hermann-Daur-Weg 21
D-2190 Cuxhaven (DE)

(72) Erfinder : MRASEK, Wilhelm
Hermann-Daur-Weg 21
D-2190 Cuxhaven (DE)

(74) Vertreter : Scholz, Hartmut, Dipl.-Ing.
Bundesallee 74
D-1000 Berlin 41 (Friedenau) (DE)

## Beschreibung

Die Erfindung betrifft eine Windkraftmaschine mit einem Gehäuse, in dem ein Vertikalrotor um eine außermittig stehende Rotorachse drehbar ist und dem Vertikalrotor relativ zur Rotorachse verschiebbare und von Wind beaufschlagbare Mittel zugeordnet sind.

Mit einer derartigen Windkraftmaschine, wie sie beispielsweise in der DE-OS 28 00 551 beschrieben ist, soll die in der Natur vorhandene Windenergie in technisch nutzbare Energie, beispielsweise elektrische Energie umgewandelt werden. Entscheidend für die Wirtschaftlichkeit einer solchen Windkraftmaschine ist ihr Wirkungsgrad und ihre Einsatzmöglichkeit. Die Einsatzmöglichkeiten aind unter anderem unter ästhetischen und städtebaulichen Gesichtspunkten zu betrachten. Vielfach ist auch eine dezentrale Energieversorgung erwünscht, die jedoch bei bekannten Windkraftmaschinen oft an der optischen Auffälligkeit scheitert, denn je größer eine solche Anlage ist, desto auffälliger und unästhetisch ist sie.

Aufgabe der Erfindung ist es, eine Windkraftmaschine der eingangs beschriebenen Art zu schaffen, die dezentral und städtebaulich unauffällig installiert werden kann und die einen guten Wirkungsgrad aufweist.

Gelöst wird diese Aufgabe dadurch, daß die von Wind beaufschlagbaren Mittel als während der Umdrehung des Vertikalrotors ein- und ausrollbare Segel ausgebildet sind, die Rotorachse an beiden Enden mit einem Rotorkopf zur Aufnahme von Rotordreharmen versehen ist, die Rotordreharme durch den Rotorkopf verschiebbar sind und die Größe der von Wind beaufschlagbaren Flächen der Segel mit den Rotordreharmen bestimmbar ist. Durch diese Maßnahmen kann eine große Segelfläche von dem einfallenden Wind beaufschlagt werden. Beim Rücklauf verringert sich diese Fläche und damit der entgegengerichtete Widerstand. Die Anlage kann dadurch bei gutem Wirkungsgrad relativ kleinbauend und zur unauffälligen dezentralen Installation ausgeführt werden.

Zur Verbesserung der aerodynamischen Wirkung ist es vorgesehen, daß das Gehäuse ein asymmetrisches Profil aufweist, das aus einer langen Gehäuseaußenwand und einer kurzen Gehäuseaußenwand besteht und die Rotorachse senkrecht zu dem Profil in dem Gehäuse verläuft. Durch diese Maßnahmen wird an der Windaustrittsöffnung ein Sog erzeugt, der eine weitere Verbesserung des Wirkungsgrads der Segel bewirkt.

Windenergie steht stets mit unterschiedlicher Intensität zur Verfügung, zur Regulierung der die Windkraftmaschine beaufschlagenden Windmenge ist es vorgesehen, daß das Gehäuse eine durch Schutzjalousien verschließbare Windeintrittsöffnung und eine mit Leitlamellen versehene Windaustrittsöffnung aufweist. Durch die Leitlamellen ist außerdem der im Bereich der Windaustrittsöffnung entstehende Sog variierbar, wobei es vorgesehen ist, daß die Schutzjalousien mit Stellarmen verstellbar und die Stellarme von Stellmotoren angetrieben sind, und daß die Schutzjalousien vertikal stehend und einander überlappend in der Windeintrittsöffnung des Gehäuses angeordnet sind.

Zur störungsfreien Führung der von Wind beaufschlagbaren Mittel ist es vorgesehen, daß die Rotordreharme zwischen Zahnrädern und Führungsrollen horizontal und zwischen untere Führungsrollen und obere Führungsrollen vertikal in den Rotorkopfgehäusen eines jeden Rotorkopfes geführt sind, wobei es zur Vermeidung von Verkantungen und Verspannungen der Segel vorgesehen ist, daß die Zahnräder der oberen und unteren Rotorköpfe über Verbindungsachsen synchron laufend miteinander verbunden sind. Zur optimalen Ausnutzung der einströmenden Windenergie ist es vorgesehen, daß die Rotordreharme an ihren, den Rotorköpfen abgewandten äußeren Enden mit Einrollvorrichtungen zum Ein- und Ausrollen der zwischen der Rotorachse und den freien Enden der Rotordreharme gespannten Segel versehen sind, sowie daß den Einrollvorrichtungen schnell anlaufende, ihre Drehrichtung schnell wechselnde Elektromotoren zugeordnet sind und die Einrollvorrichtungen mit vertikal verlaufenden Aufwickelachsen versehen sind.

Um die Windkraftmaschine auch bei geringer Windgeschwindigkeit richtig in den Wind stellen zu können, ist es vorgesehen, daß das Gehäuse mit Rollen versehen und auf einem Drehkranz drehbar angeordnet ist und einer der Rollen ein Stellmotor zum Drehen des Gehäuses zugeordnet ist, wobei es vorgesehen ist, daß dem Gehäuse ein Windrad zugeordnet ist und der den Drehkranz verdrehende Stellmotor von dem Windrad angesteuert ist.

Weitere vorteilhafte Maßnahmen sind in den übrigen Unteransprüchen beschrieben. Die Erfindung ist in der beiliegenden Zeichnung dargestellt und wird nachfolgend näher beschrieben; es zeigt:

Fig. 1 die Seitenansicht einer auf einem Gebäude installierten, dezentralen Windkraftmaschine;

Fig. 2 die Draufsicht auf eine Windkraftmaschine nach Fig. 1;

Fig. 3 den Schnitt durch den Dachaufbau und das Brüstungselement zur Aufnahme einer Windkraftmaschine in Seitenansicht;

Fig. 4 die Draufsicht, ausschnittsweise, auf das Brüstungselement nach der Fig. 3;

Fig. 5 das Gehäuse einer Windkraftmaschine nach Fig. 1 in Seitenansicht, gemäß Schnitt A — A in Fig. 6;

Fig. 6 die Draufsicht auf das Gehäuse einer Windkraftmaschine nach der Fig. 5, geschnitten;

Fig. 7 das Gehäuse einer Windkraftmaschine nach Fig. 1 in Seitenansicht mit Detaildarstellung der Segelanordnung gemäß Schnitt B — B in Fig. 8;

Fig. 8 die Draufsicht auf das Gehäuse einer Windkraftmaschine nach der Fig. 7 mit einer Detaildarstellung der Segelanordnung und der relativ bewegbaren Rotordreharme ;

Fig. 9 die Seitenansicht eines Rotorkopfes einer Windkraftmaschine nach Fig. 1, gemäß Schnitt C — C in Fig. 10 ;

Fig. 10 die Draufsicht auf den Rotorkopf nach der Fig. 9.

Fig. 11 die Seitenansicht des Gehäuses einer Windkraftmaschine nach der Fig. 1 mit Aufsatzmast ;

Fig. 12 die Draufsicht auf das Gehäuse nach der Fig. 11.

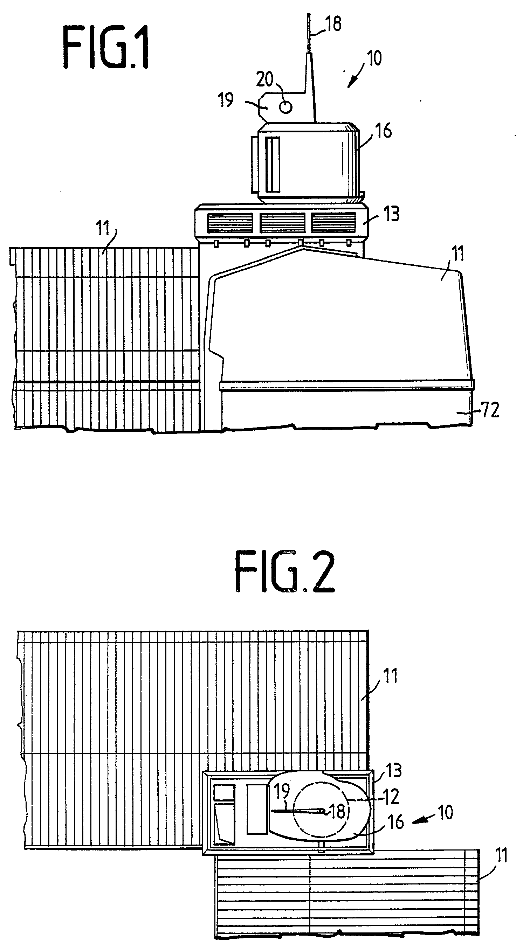

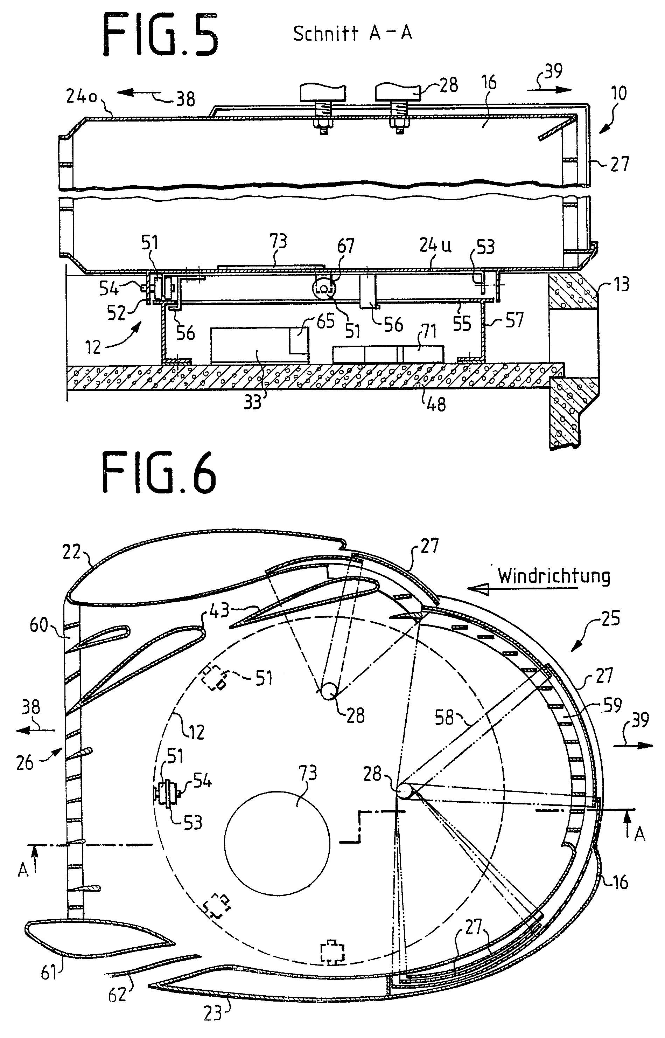

Die in den Figuren 1 und 2 dargestellte Windkraftmaschine 10 besteht im wesentlichen aus einem Gehäuse 16 mit einem Aufsatzmast 18, die über ein Brüstungselement 13 mit einem Dach- oder Treppenhauskopf 11 verbunden ist. Der Aufsatzmast 18, um den ein Windleitwerk 19 verschwenkbar ist, ist auf das Gehäuse 16 aufgesetzt. Mit Hilfe des Windleitwerks 19 ist das gesamte Gehäuse 16 auf einem Drehkranz 12 um die eigene Achse drehbar. An dem Windleitwerk 19 ist ein leichtlaufendes Windrad 20 angebracht, das bereits bei leichten Winden anspricht. Es ist mit einem — in der Fig. 5 dargestellten — Stellmotor 67 verbunden, mit dem das Gehäuse 16 auf dem Drehkranz 12 gedreht werden kann.

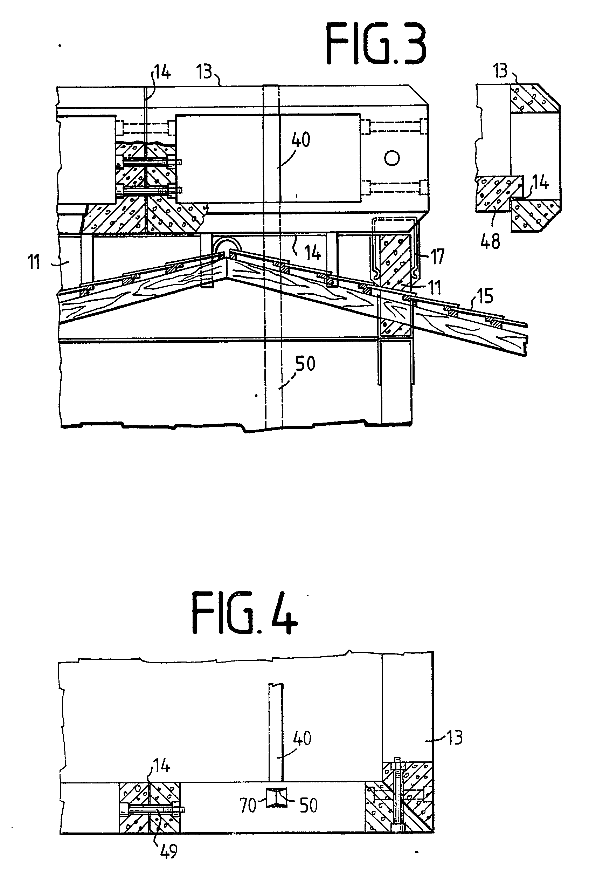

Wie die Figuren 3 und 4 zeigen, ist das Brüstungselement 13 über eine elastische Zwischenschicht 14 mit dem Dach- oder Treppenhauskopf 11 eines Gebäudes 72 verbunden. Das Brüstungselement 13 besteht aus mehreren Beton-Fertigteilen, in die Verbindungsklammern 17 eingegossen sind. Die Verbindungsklammern 17 dienen zur Befestigung des Brüstungselements 13 auf dem Dach- oder Treppenhauskopf 11 oberhalb der Dachabdeckung 15. Die einzelnen Fertigbauelemente des Brustungselements 13 sind durch Verbindungselemente 49 miteinander verbunden. Als Verbindungselemente 49 können beispielsweise Zuganker oder Schrauben verwendet werdem. Zwischen den einzelnen Betonfertigteilen sind ebenfalls elastische Zwischenschichten 14 vorgesehen. Zur Verankerung der Windkraftmaschine 10 auf dem Dach- oder Treppenhauskopf 11 bzw. mit einem Deckenfertigteil 48 ist ein Verankerungselement 50 vorgesehen, das in Form eines I-Profil-Stahltragers in einem Wandschlitz 70 senkrecht durch das Brüstungselement 13 und das gesamte Gebäude 72 geführt ist. Zur Verstärkung des Brüstungselements 13 ist ein mit dem Verankerungselement 50 verbundenes, querverlaufendes Versteifungselement 40 vorgesehen ; das Versteifungselement 40 kann ebenfalls aus Stahl sein.

Wie die Fig. 5 zeigt, ist in dem Brüstungselement 13 ein Drehkranz 12 angeordnet. Der Drehkranz 12 ruht auf einem Deckenfertigteil 48 des Brüstungselements 13 und ist fest mit diesem verbunden. Der Drehkranz 12 ist kreisrund ausgebildet und besteht im wesentlichen aus einem senkrecht stehenden Drehkranzsteg 57 mit einer Lauffläche 55. Auf der Lauffläche 55 laufen eine Vielzahl von Rollen 51. Die Rollen 51 sind mit Rollenachsen 54 versehen und in äußeren Rollenführungen 52 und inneren Rollenführungen 53 gehalten. Die Rollenführungen 52 und 53 sind fest mit der unteren Gehäuseaußenwand 24u des Gehäuses 16 verbunden. Um ein Abkippen des Gehäuses 16 von dem Drehkranz 12 zu verhindern sind die inneren, im wesentlichen senkrecht verlaufenden Rollenführungen 53 mit waagerecht, radial nach außen gerichteten Sicherungslaschen 56 versehen, die mit einem geringen Abstand unter die Drehkranz-Lauffläche 55 greifen. Einer der Rollen 51 ist ein Stellmotor 67 zugeordnet, mit dem das Gehäuse 16 auf dem Drehkranz 12 jeweils in die richtige Windrichtung gedreht werden kann. Der Stellmotor 67 erhält dabei seine Regelungsimpulse von dem oben beschriebenen leicht laufendem Windrad 20. Auf diese Weise kann das Gehäuse 16 auch dann in den Wind gedreht werden, wenn die Windstärke noch nicht ausreicht um das gesamte Gehäuse mit Hilfe des oben beschriebenen Windleitwerks 19 zu drehen. Die von dem Stellmotor benötigte elektrische Energie kann beispielsweise in Akkumulatoren 71 gespeichert werden. Die Akkumulatoren 71 können beispielsweise in dem Innenraum des Drehkranzes 12 unterhalb des Gehäuses 16 untergebracht werden. In diesem Innenraum kann auch ein von der Windkraftmaschine 10 über ein mehrstufiges Getriebe 65 angetriebener elektrischer Generator 33 untergebracht sein. Um diesen Innenraum begehen zu können, ist die untere Gehäuseaußenwand 24u mit einem Einstiegdeckel 73 versehen.

Wie die Fig. 6 zeigt, weist das Gehäuse 16 in Draufsicht ein asymmetrisches Profil mit einer langen Gehäuseaußenwand 22 und einer kurzen Gehäuseaußenwand 23 auf. Die beiden im wesentlichen senkrecht stehenden Gehäuseaußenwände 22 und 23 sind oben durch eine im wesentlichen waagerecht verlaufende Gehäuseaußenwand 24o und unten mit einer unteren Gehäusewand 24u abgedeckt. Zwischen den Gehäuseaußenwänden 22 und 23 ist eine Windeintrittsöffnung 25 und eine dieser gegenüber liegende Windaustrittsöffnung 26 vorgesehen. Mit Hilfe des Windleitwerks 19 bzw. des Windrades 20 wird die Windeintrittsöffnung 25 stets so gegen die Windrichtung gedreht, daß sie die Luvseite 39 und die Windaustrittsöffnung 26 die Leeseite 38 des Gehäuses 16 darstellt. In der Windeintrittsöffnung 25 sind Einlaßlamellen 59 und in der Windaustrittsöffnung 26 sind Auslaßlamellen 60 angeordnet.

Neben den Ein- und Auslaßlamellen 59 bzw. 60 sind in dem Gehäuse 16 noch Leitlamellen 43 und 62 vorgesehen, die zusammen mit der langen Gehäuseaußenwand 22 für einen Unterdruck an der Gehäuserückwand 61 sorgen. Durch diesen Unterdruck entsteht im Bereich der Windaustrittsöffnung 26 ein Sog durch den günstige Strömungsverhältnisse in dem Gehäuse 16 aufrechterhalten werden. Um den Innenraum des Gehäuses 16 bei stärker werdendem Wind bzw. Sturm vor Beschädigung schützen zu können, ist die Windeintrittsöffnung mit Schutzjalousien 27 partiell bis ganz verschließbar. Die Schutzjalousien 27 sind an den oberen und unteren Gehäuseaußenwänden 24o bzw. 24u mit Hilfe von Stellarmen 58 einander überlappend vor die Windeintrittsöffnung 25 verschiebbar. Die Stellarme 58 sind mit Hilfe von elektrisch betriebenen Stellmotoren 28 einzeln oder gemeinsam verschwenkbar.

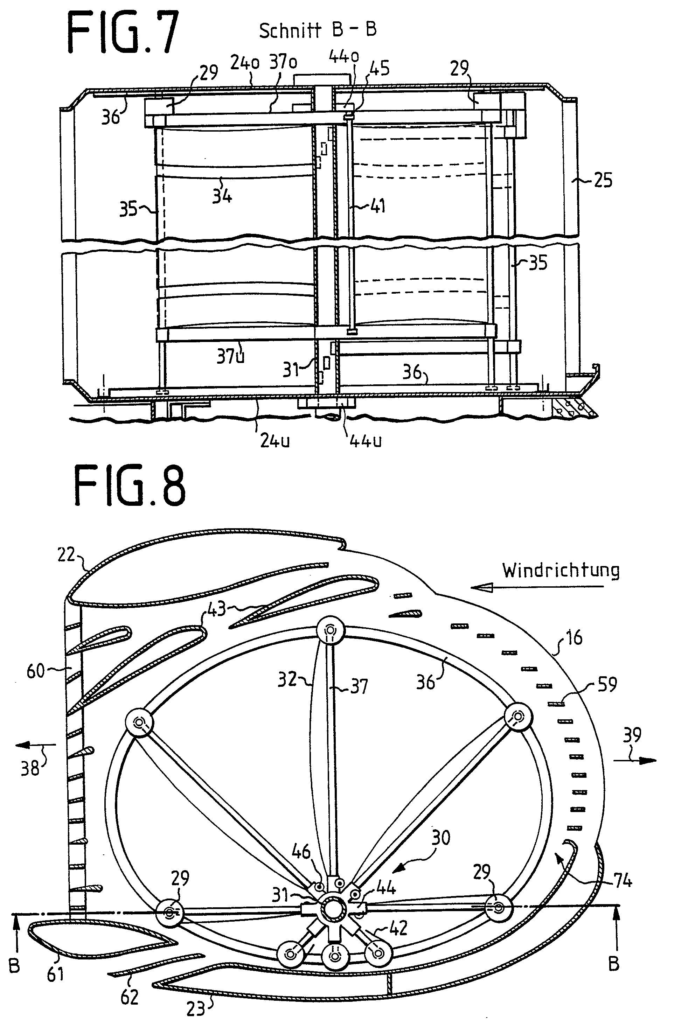

Wie die Fig. 7 und 8 zeigen, ist in dem Gehäuse 16 ein Rotor 30 mit einer im wesentlichen vertikal verlaufenden, außerhalb der Gehäusemitte stehenden Rotorachse 31 angeordnet. Die Rotorachse 31 ist an ihren beiden Enden mit einem oberen Rotorkopf 44o und einem unteren Rotorkopf 44u versehen, durch die obere Rotordreharme 37o und untere Rotordreharme 37u relativ verschiebbar sind. An der Rotorachse 31 sind Segel 32 befestigt. Diese Segel 32 sind auf ihren der Rotor achse 31 abgewandten Außenseite an Aufwickelachsen 35 befestigt. Die Aufwickelachsen 35 sind mit Elektromotoren 29 versehen, die schnell anlaufend und in ihre Drehrichtung wechselnd ausgebildet sind. Die Aufwickelachsen 35 sind mit den oberen Rotordrehachsen 37o und den unteren Rotordrehachsen 37u verbunden und in ihrer Stellung zur Rotorachse 31 relativ verschiebbar. Um die Aufwickelachsen 35 können die Segel 32 ein- oder ausgerollt werden. Die Segel 32 laufen bei jeder Umdrehung in eingerolltem Zustand 42 unmittelbar an den Rotorköpfen 44u bzw 44o vorbei. Die Aufwickelachsen 35 laufen in Profilbahnen 36. Der oberen Gehäuseaußenwand 24o und der unteren Gehäuseaußenwand 24u ist je eine Profilbahn 36 zugeordnet. Die Profilbahnen 36 sind annähernd ellipsenförmig ausgebildet. Zur Verstärkung der Segel 32 sind diesen Stahldrahtgeflechtbänder 34 zugeordnet. Die Stahldrahtgeflechtbänder 34 verlaufen im wesentlichen parallel zueinander und sind radial nach außen gerichtet.

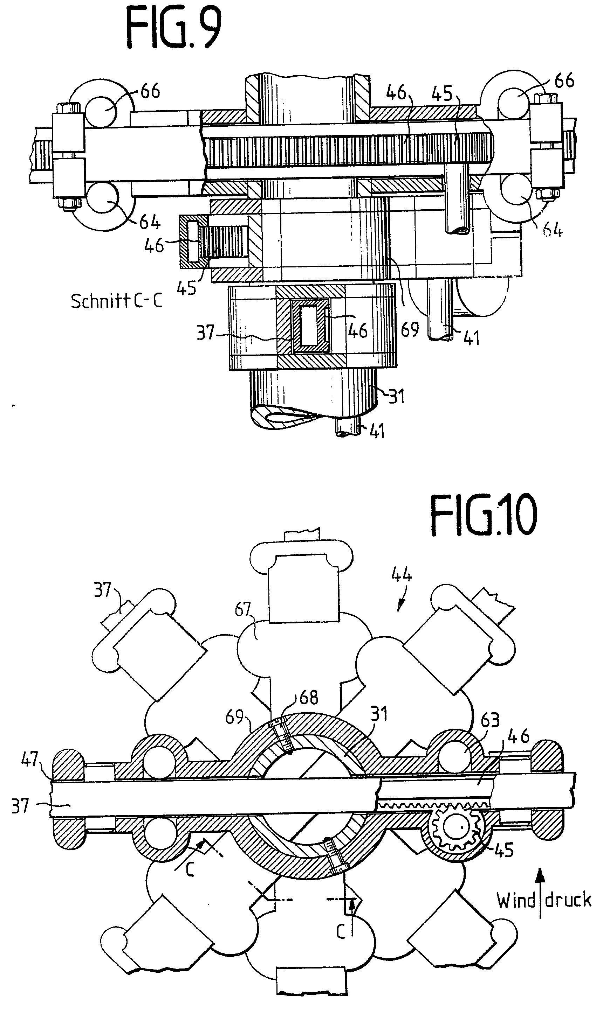

Die Rotordreharme 37o und 37u sind, wie die Figuren 9 und 10 zeigen, an einer Seite mit einer Zahnung 46 versehen, in der Zahnräder 45 kämmen, die den Rotorköpfen 44o und 44u zugeordnet sind. Die Zahnräder 45 sind über Verbindungsachsen 41 miteinander verbunden. Die Verbindungsachsen 41 verlaufen im wesentlichen parallel zu der Rotorachse 31 bzw. zu den Aufwickelachsen 35 vertikal in dem Gehäuse 16. Ein in den Figuren 9 und 10 dargestellter Rotorkopf 44 besteht aus einem Rotorkopfgehäuse 69 mit durchgehenden, im wesentlichen horizontal verlaufenden Dreharmführungen 47. Bei der dargestellten Ausführungsform sind insgesamt vier durchgehende Rotordreharme 37 in dem Rotorkopfgehäuse 69 angeordnet. Die Rotordreharme 37 sind in der Höhe gegeneinander versetzt, so daß sie sich nicht berühren. Sie sind in dem Rotorkopfgehäuse 69 bzw. in den Dreharmführungen 47 verschiebbar und kreuzen einander unter einem Winkel von 45 Grad.

In die Zahnungen 46 greifen die Zahnräder 45 ein, denen gegenüberliegende Führungsrollen 63 zugeordnet sind. Gegen vertikale Verkantung sind die Rotordreharme 37 mit oberen Führungsrollen 66 und unteren Führungsrollen 64 in den Dreharmführungen 47 des Rotorkopfgehäuses 69 abgestützt. Die Rotorkopfgehäuse 69 sind durch Befestigungselemente 68, beispielsweise durch Madenschrauben, mit der Rotorachse 31 verbunden. Die Rotorachse 31 ihrerseits wirkt auf ein Getriebe 65. Das Getriebe 65 ist unterhalb des Gehäuses 16 im Bereich des Generators 33 angeordnet und mehrstufig ausgebildet, um den Generator 33 auch bei geringen Drehgeschwindigkeiten antreiben zu können.

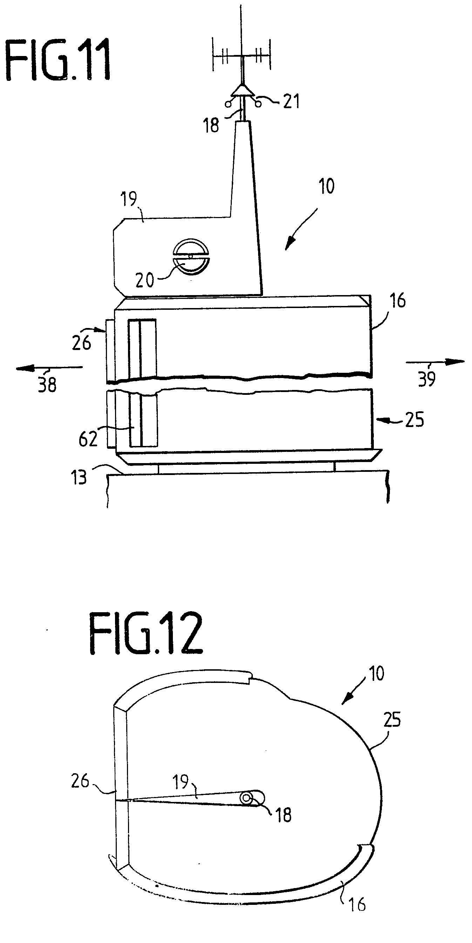

In den Figuren 11 und 12 ist die Windkraftmaschine 10 nochmals in Seitenansicht und Draufsicht im Detail dargestellt. Wie die Fig. 11 zeigt, ist der Aufsatzmast 18 mit einem Windleitwerk 19 versehen, dem außerdem ein leicht laufendes Windrad 20 zugeordnet ist. Oberhalb des Windleitwerkes 19 ist ein Fliehkraftregler 21 angeordnet, mit dem die Windgeschwindigkeit erfaßt und die Einlaßgröße der Windeintrittsöffnung 25 mit Hilfe der Schutzjalousien 27 geregelt werden kann. So kann die Windeintrittsöffnung 25 des Gehäuses 16 von « ganz geöffnet » bei leichtem Wind bis « ganz geschlossen » bei schwerem Sturm geregelt werden.

Anhand des oben beschriebenen Ausführungsbeispiels wird die Funktion der Erfindung nachfolgend beschrieben :

Mit Hilfe des Windleitwerks 19 bzw. des leicht laufenden Windrades 20 und eines von diesem geregelten Stellmotors 67 wird das Gehäuse 16 der Windkraftmaschine 10 so in den Wind gedreht, daß die Windeintrittsöffnung 25 die Luvseite 39 darstellt. Mit Hilfe weiterer Stellmotoren 28 werden die Schutzjalousien 27 entsprechend den herrschenden Windverhältnissen geöffnet. Die Regelung erfolgt dabei über einen Fliehkraftregler 21, der dem Aufsatzmast 18 zugeordneten ist.

In dem Gehäuse 16 sind zwischen der Rotorachse 31 und den Aufwickelachsen 35 Segel 32 gespannt. Die jeweils erforderliche Segelfläche wird durch den Abstand der Rotordreharme 37 zu den Rotorköpfen bestimmt. Die Rotordreharme 37 sind um eine außerhalb der Mitte stehende, vertikal verlaufende Rotorachse 31 drehbar und an ihren äußeren Enden mit Elektromotoren 29 versehen. Bei jedem Umlauf werden die Segel 32 von den schnell anlaufenden, und ihre Drehrichtung schnell ändernden Elektromotoren 29 während des Vorlaufes in Richtung auf die Windeintrittsöffnung 25 ausgerollt und gespannt und beim Rücklauf wieder eingerollt. Ein derartiges Segel in eingerolltem Zustand 42 stellt bei dem gegen die Windrichtung erfolgenden Rücklauf eine geringe Angriffsfläche für den Wind dar, wodurch der Wirkungsgrad des Rotors 30 erheblich vergrößert werden kann. Außerdem befindet sich die Rotorachse 31 und mit ihr die jeweils eingerollten Segel 42 in dem Windschatten der Windeintrittsöffnung 25. Die Rotorachse 31 wirkt in bekannter Weise über ein mehrstufiges Getriebe 65 auf einen Generator. Mit Hilfe des mehrstufigen Getriebes 65 können auch geringe Umdrehungen des Rotors 30 — und damit auch geringe Windmengen — ausgenutzt werden.

## Patentansprüche

1. Windkraftmaschine mit einem Gehäuse, in dem ein Vertikalrotor um eine außermittig stehende Rotorachse drehbar ist und dem Vertikalrotor relativ zur Rotorachse verschiebbare und von Wind beaufschlagbare Mittel zugeordnet sind, dadurch gekennzeichnet, daß die von Wind beaufschlagbaren Mittel als während der Umdrehung des Vertikalrotors (30) ein- und ausrollbare Segel (32) ausgebildet sind, die Rotorachse (31) an beiden Enden mit einem Rotorkopf (44) zur Aufnahme von Rotordreharmen (37) versehen ist, die Rotordreharme (37) durch den Rotorkopf (44) verschiebbar sind und die Größe der von Wind beaufschlagbaren Flächen der Segel (32) mit den Rotordreharmen (37) bestimmbar ist.

2. Windkraftmaschine nach Anspruch 1, dadurch gekennzeichnet, daß das Gehäuse (16) ein asymmetrisches Profil aufweist, das aus einer langen Gehäuseaußenwand (22) und einer kurzen Gehäuseaußenwand (23) besteht und die Rotorachse (31) senkrecht zu dem Profil in dem Gehäuse (16) verläuft und das Gehäuse (16) mit Rollen (51) versehen und auf einem Drehkranz (12) drehbar angeordnet ist und einer der Rollen (51) ein Stellmotor (67) zum Drehen des Gehäuses (16) zu geordnet ist, wobei dem Gehäuse (16) ein Windrad (20) zugeordnet ist und der den Drehkranz (12) verdrehende Stellmotor (67) von dem Windrad (20) angesteuert ist, dem Gehäuse (16) ein Aufsatzmast (18) zugeordnet ist und dem Aufsatzmast (18) das Windrad (20) und ein Windleitwerk (19) zugeordnet sind.

3. Windkraftmaschine nach den Ansprüchen 1 und 2, dadurch gekennzeichnet, daß das Gehäuse (16) über ein Brüstungselement (13) mit einem Dach- oder Treppenhauskopf (11) und das Brüstungselement (13) über ein Verankerungselement (50) auf dem Gebäude (72) verankert ist, wobei das Verankerungselement (50) im wesentlichen senkrecht durch das gesamte Gebäude (72) und das Brüstungselement (13) verlaufend ausgebildet ist.

4. Windkraftmaschine nach Anspruch 1, dadurch gekennzeichnet, daß das Gehäuse (16) eine durch Schutzjalousien (27) verschließbare Windeintrittsöffnung (25) und eine mit Leitlamellen (43, 60, 62) versehene Windaustrittsöffnung (26) aufweist, daß die Schutzjalousien (27) mit Stellarmen (58) verstellbar und die Stellarme (58) von Stellmotoren (28) angetrieben sind und die Schutzjalousien (27) vertikal stehend und einander überlappend in der Windeintrittsöffnung (25) des Gehäuses (16) angeordnet sind.

5. Windkraftmaschine nach den Ansprüchen 1 und 2, dadurch gekennzeichnet, daß die Rotordreharme (37o) des oberen Rotorkopfes (44o) über weitere, im wesentlichen parallel zur Rotorachse (31) verlaufende Achsen (35, 41) mit den Rotordreharmen (37u) des unteren Rotorkopfes (44u) verbunden sind und daß die Rotordreharme (37u, 37o) einseitig mit Zahnungen (46) versehen sind, die mit in den Rotorköpfen (44u, 44o) angeordneten Zahnrädern (45) kämmen.

6. Windkraftmaschine nach Anspruch 5, dadurch gekennzeichnet, daß die Rotorköpfe (44) mit Dreharmführungen (47) versehen und die Rotordreharme (37) einstückig in den Dreharmführungen (47) durch die Rotorköpfe (44) verschiebbar geführt sind, wobei die Rotordreharme (37) sich kreuzend in mehreren Ebenen übereinander liegend, sich nicht berührend durch die Rotorköpfe (44) geführt sind.

7. Windkraftmaschine nach den Ansprüchen 5 und 6, dadurch gekennzeichnet, daß die Rotordreharme (37) zwischen Zahnrädern (45) und Führungsrollen (63) horizontal und zwischen unteren Führungsrollen (64) und oberen Führungsrollen (66) vertikal in den Rotorkopfgehäusen (69) eines jeden Rotorkopfes (44) geführt sind, wobei die Zahnräder (45) der oberen und unteren Rotorköpfe (44) über Verbindungsachsen (41) synchron laufend miteinander verbunden sind.

8. Windkraftmaschine nach den Ansprüchen 5 bis 7, dadurch gekennzeichnet, daß die Rotordreharme (37) an ihren, den Rotorköpfen (44) abgewandten äußeren Enden mit Einrollvorrichtungen (29) zum Ein- und Ausrollen der zwischen der Rotorachse (31) und den Aufwickelachsen (35) gespannten Segel (32) versehen sind, den oberen Einrollvorrichtungen (29) schnell anlaufende, ihre Drehrichtung schnell wechselnde Elektromotoren zugeordnet sind und die oberen Einrollvorrichtungen (29) über ein Getriebe mit den Aufwickelachsen (35) verbunden sind.

9. Windkraftmaschine nach Anspruch 8, dadurch gekennzeichnet, daß die Einrollvorrichtungen (29) auf den oberen und unteren, ebenen Gehäusewänden (24) zugeordneten, annähernd ellipsenförmigen Profilbahnen (36) laufen.

## Claims

1. A wind power machine having a housing in which a vertical rotor is rotatable about an eccentrically standing rotor axle and means associated with the vertical rotor which are displaceable relative to the rotor axle and which can be acted upon by wind, characterised in that the means which can be acted upon by wind are designed as sails (32) which can be rolled in and out during the rotation of the vertical rotor (30), the rotor axle (31) is provided at both ends with a rotor head (44) for the reception of rotor arms (37), the rotor arms (37) are displaceable by the rotor head (44) and the size of the surface areas of the sails (32), which can be acted upon by wind, is determinable with the rotor arms (37).

2. A wind power machine according to claim 1, characterised in that the housing (16) has an asymmetric profile which consists of a long housing outer wall (22) and a short housing outer wall (23) and the rotor axle (31) extends perpendicular to the profile in the housing (16) and the housing (16) is provided with rollers (51) and is arranged rotatably on a turntable (12) and a servomotor (67) is associated with one of the rollers (51), for the rotation of the housing (16) in which respect an impeller (20) is associated with the housing (16) and the servomotor (67) which rotates the turntable (12) is controlled by the impeller (20), a superstructure mast (18) is associated with the housing (16) and the impeller (20) and a wind steering gear (19) are associated with the superstructure mast (18).

3. A wind power machine according to claims 1 and 2, characterised in that the housing (16) is anchored by way of a parapet element (18) with a roof- or stair well- head (11) and the parapet element (13) is anchored by way of an anchoring element (50) on the building (72), in which respect the anchoring element (50) is designed extending substantially perpendicular through the entire building (72) and the parapet element (13).

4. A wind power machine according to claim 1, characterised in that the housing (16) has a wind inlet aperture (25) which is closable by protective louvres (27) and a wind outlet aperture (26) which is provided with guide lamellae (43, 60, 62), in that the protective louvres (27) are adjustable with adjusting arms (58) and the adjusting arms (58) are driven by servomotors (28) and the protective louvres (27) are arranged standing vertically and overlapping one another in the wind inlet aperture (25) of the housing (16).

5. A wind power machine according to claims 1 and 2, characterised in that the rotor arms (37o) of the upper rotor head (44o) are connected by way of further axles (35, 41), extending substantially parallel to the rotor axle (31), to the rotor arms (37u) of the lower rotor head (44u) and in that the rotor arms (37u, 37o) are provided on one side with toothings (46) which mesh with toothed wheels (45) which are arranged in the rotor heads (44u, 44o).

6. A wind power machine according to claim 5, characterised in that the rotor heads (44) are provided with rotating-arm guides (47) and the rotor arms (37) are guided by the rotor heads (44) so as to be displaceable in one piece in the rotating-arm guides (47) in which respect the rotor arms (37) are guided by the rotor heads (44) and intersect one another in several planes, lying above one another, not in contact with one another.

7. A wind power machine according to claim 5 and 6, characterised in that the rotor arms (37) are guided horizontally between toothed wheels (45) and guide rollers (63) and vertically between lower guide rollers (64) and upper guide rollers (66) in the rotor-head housings (69) of each rotor head (44), in which respect the toothed wheels (45) of the upper and lower rotor heads (44) are connected by way of connecting shafts (41) for synchronous running with one another.

8. A wind power machine according to claims 5 to 7, characterised in that the rotor arms (37) are provided at their outer ends remote from the rotor heads (44) with roll-in devices (29) for the rolling in and out of the sails (32) tensioned between the rotor axle (31) and the winding-up axles (35), associated with the upper roll-in devices (29) are rapidly-starting electric motors which rapidly change their direction of rotation and the upper roll-in devices (29) are connected by way of a gearing to the winding-up axles (35).

9. A wind power machine according to claim 8 characterised in that the roll-in devices (29) run on approximately ellipse-shaped profile tracks (36) which are associated with the upper and lower, planar housing walls (24).

## Revendications

1. Eolienne comprenant un carter dans lequel un rotor vertical peut tourner autour d'un axe de rotor excentré, des moyens pouvant être soumis à l'action du vent et déplacés par rapport à l'axe du rotor étant associés au rotor vertical, caractérisée par le fait que les moyens pouvant être soumis à l'action du vent sont réalisés sous la forme de voiles (32) qui peuvent être enroulées et déroulées pendant la rotation du rotor vertical (30), que l'axe du rotor (31) est muni à ses deux extrémités d'une tête de rotor (44) destinée à recevoir des bras de rotor tournants (37), que les bras de rotor tournants (37) peuvent être déplacés à travers la tête de rotor (44), et que les dimensions des surfaces des voiles (32) pouvant être soumises à l'action du vent peuvent être déterminées au moyen des bras de rotor tournants (37).

2. Eolienne selon la revendication 1, caractérisée par le fait que le carter (16) présente un profil asymétrique qui se compose d'une paroi extérieure de carter longue (22) et d'une paroi extérieure de carter courte (23), que l'axe du rotor (31) s'étend dans le carter (16) perpendiculairement à ce profil, que le carter (16) est muni de galets (51) et monté tournant sur une couronne (12), et qu'un servomoteur (67) est associé à l'un des galets (51) pour faire tourner le carter (16), cependant qu'une roue éolienne (20) est associée au carter (16), que le servo-moteur (67) contournant la couronne de roulement (12) est commandé par la roue éolienne (20), qu'un mât de montage (18) est associé au carter (16), et que la roue éolienne (20) et une girouette (19) sont associées au mât de montage (18).

3. Eolienne selon les revendications 1 et 2, caractérisée par le fait que le carter (16) est ancré sur le haut d'un toit ou d'une cage d'escalier (11) par l'intermédiaire d'un élément de parapet (13), et que l'élément de parapet (13) est ancré sur le bâtiment (72) par l'intermédiaire d'un élément d'ancrage (50), l'élément d'ancrage (50) étant formé de façon à s'étendre, verticalement pour l'essentiel, à travers l'ensemble du bâtiment (72) et l'élément de parapet (13).

4. Eolienne selon la revendication 1, caractérisée par le fait que le carter (16) comporte une ouverture d'entrée du vent (25) pouvant être fermée par des volets de protection (27) et une ouverture de sortie du vent (26) munie de lames directrices (43, 60, 62), et par le fait que les volets de protection (27) peuvent être déplacés au moyen de bras de réglage (58), que les bras de réglage (58) sont entraînés par des servo-moteurs (28), et que les volets de protection (27) sont disposés dans l'ouverture d'entrée du vent (25) du carter (16) en étant disposés verticalement et en se recouvrant mutuellement.

5. Eolienne selon les revendications 1 et 2, caractérisée par le fait que les bras de rotor tournants (37o) de la tête de rotor supérieure (44o) sont reliés aux bras de rotor tournants (37u) de la tête de rotor inférieure (44u) par l'intermédiaire d'autres axes (35, 41) s'étendant pour l'essentiel parallèlement à l'axe du rotor (31), et par le fait que les bras de rotor tournants (37u, 37o) sont munis d'un côté de dents (46) qui engrènent avec des roues dentées (45) montées dans les têtes de rotor (44u, 44o).

6. Eolienne selon la revendication 5, caractérisée par le fait que les têtes de rotor (44) sont munies de guides (47) destinés aux bras tournants, et que les bras de rotor tournants (37) peuvent être déplacés en une seule pièce dans les guides (47) des bras tournants et à travers les têtes de rotor (44), les bras de rotor tournants (37) étant guidés à travers les têtes de rotor (44) en se croisant sans se toucher et en étant disposés les uns au-dessus des autres dans plusieurs plans.

7. Eolienne selon les revendications 5 et 6, caractérisées par le fait que les bras de rotor tournants (37) sont guidés dans les carters (69) de chaque tête de rotor (44), horizontalement entre des roues dentées (45) et des galets de guidage inférieurs (64) et des galets de guidage supérieurs (66), les roues dentées (45) des têtes de rotor (44) supérieure et inférieure étant reliées entre elles par des axes de liaison (41) en tournant de manière synchrone.

8. Eolienne selon les revendications 5 à 7, caractérisée par le fait que les bras de rotor tournants (37) sont munis, à leurs extrémités extérieures opposées aux têtes de rotor (44), de dispositifs d'enroulement (29) pour enrouler et dérouler les voiles (32) tendues entre l'axe du rotor (31) et les axes d'enroulement (35), que des moteurs électriques à rotation rapide et pouvant changer rapidement de sens de rotation sont associés aux dispositifs d'enroulement supérieurs (29), et que les dispositifs d'enroulement supérieurs (29), et que les dispositifs d'enroulement (35) par l'intermédiaire d'une transmission.

9. Eolienne selon la revendication 8, caractérisée par le fait que les dispositifs d'enroulement (29) se déplacent sur des chemins profilés (36) sensiblement elliptiques qui sont associés aux parois planes supérieure et inférieure (24) du carter.

# FIG.1

# FIG.2

# FIG.3

# FIG.4

# FIG.5

Schnitt A – A

# FIG.6

Windrichtung

# FIG.7

Schnitt B – B

# FIG.8

Windrichtung

# FIG.9

Schnitt C-C

# FIG.10

Wind druck

# FIG.11

# FIG.12